# EUROPÄISCHE PATENTANMELDUNG

(11) **EP 2 251 180 A1**
(43) Veröffentlichungstag der Anmeldung: **17.11.2010**
(21) Anmeldenummer: 09075229.6
(22) Anmeldetag: 13.05.2009
(51) Int. Cl.: B29C 49/42, B29C 49/04, B29C 49/56, B29C 49/76

(54) **Anordnung und Verfahren zum elektromechanischen Antrieb für Formschließ- und Kalibrierblasdornsysteme in Blasformmaschinen**

(71) Anmelder: Uniloy Milacron Germany GmbH, 14979 Grossbeeren (DE)
(72) Erfinder: Arndt, Torsten, 15754 Heidesee/OT Dannenreich (DE); Nimpsch, Norbert, 12107 Berlin (DE); Szczepanski, Stefan, 12683 Berlin (DE)
(74) Vertreter: Golkowsky, Stefan

(57) **Zusammenfassung**

Die Erfindung betrifft eine Anordnung und ein Verfahren zum elektromechanischen Antrieb für Formschließ- und Kalibrierblasdornsystemen in Blasformmaschinen, wobei Anordnung zum Antrieb einer Extrusionsblasformmaschine eine Schubmechanik (3; 11) eine Schubstange (4; 12) und mindestens einen Elektromotor (1; 9) umfasst, wobei die Schubstange (4; 12) durch die Schubmechanik (3; 11)bewegbar ist, die von dem mindestens einen Elektromotor (1; 9) angetrieben ist, wobei der Elektromotor (1; 9) eine zusätzliche Bremseinrichtung (2; 10) aufweist, die bei Erreichen eines erforderlichen bis zum Sitzenmoment einstellbaren Drehmomentes des Elektromotors (2; 10) aktivierbar ist, um die Schubstange (4; 12) in einem Zustand maximaler Spannung in ihrer Momentanposition zu halten.

## Beschreibung

### Anordnung und Verfahren zum elektromechanischen Antrieb für Formschließ- und Kalibrierblasdornsysteme in Blasformmaschinen

Die Erfindung betrifft eine Anordnung und ein Verfahren zum elektromechanischen Antrieb für Formschließ- und Kalibrierblasdornsysteme in Blasformmaschinen.

Für den Antrieb von Formschließ- und Kalibrierblasdornsystemen in Blasformmaschinen werden derzeit Hydraulikzylinder eingesetzt, um die erforderlichen schnellen Bewegungen und hohen Kräfte im Stillstand während des Blasprozesses zu erreichen. Mit rein elektromechanischen Antrieben können die hohen Schließ- und Kalibrierkräfte insbesondere über einen längeren Zeitraum nicht gehalten werden. Auch mit zugeschalteten mechanischen Zwischengliedern, die beispielsweise nach dem Kniehebelprinzip arbeiten, bleibt bei einer Veränderung der Stillstandsposition der Nachteil eines Nachjustierens beziehungsweise einer Korrektur der Hebelstellung.

Es ergibt sich die Aufgabe einen elektromechanischen Antrieb für Formschließ- und Kalibrierblasdornsysteme in Blasformmaschinen zu entwickeln, bei dem die hohen Schließ- und Kalibrierkräfte mit geringem Aufwand über einen längeren Zeitraum für einen dauerhaften Betrieb zuverlässig aufrechterhalten und wieder abgebaut werden können.

Diese Aufgabe wird erfindungsgemäß gelöst durch eine Anordnung mit den Merkmalen des Anspruchs 1 und ein Verfahren mit den Merkmalen des Anspruchs 14. Vorteilhafte Ausgestaltungen und Weiterbildungen der Erfindung ergeben sich mit den Merkmalen der Unteransprüche.

Es wird eine Anordnung zum Antrieb einer Extrusionsblasformmaschine vorgeschlagen, die eine Schubmechanik, eine Schubstange und mindestens einen Elektromotor umfasst, wobei die Schubstange durch die Schubmechanik bewegbar ist, die von dem mindestens einen Elektromotor angetrieben ist, wobei der Elektromotor eine zusätzliche Bremseinrichtung aufweist, die bei Erreichen eines erforderlichen Drehmomentes bis zur Ausnutzung des möglichen Spitzenmomentes des Elektromotors aktivierbar ist, um die Schubstange in einem Zustand einer benötigten Kraft in ihrer Momentanposition zu halten. Diese Anordnung ermöglicht die Aufrechterhaltung hoher Kräfte für Formschließ- und Kalibrierblasdornsysteme ohne den Einsatz von zusätzlichen Elementen zur Kraftverstärkung. Bei veränderter Formdicke und Kalibriertiefe ist keine zusätzliche Anpassung erforderlich, da das System bis auf das Aktivieren und Deaktivieren der Bremseinrichtung analog einem direkt wirkenden Hydraulikzylinder arbeitet. Die Anordnung ist für alle Formschließ- und Kalibriersysteme, bei denen bislang direkt wirkende Hydraulikzylinder verwendet wurden, uneingeschränkt einsetzbar.

Im Gegensatz zu einer einfachen "Spritzblasformmaschine" handelt es sich vorliegend vorzugsweise um eine Extrusionsblasformmaschine. Der Unterschied zwischen einer Spritzformblasmaschine und einer "reinen" Extrusionsblasformmaschine ist, dass beim Spritzblasen ein durch Spritzen erzeugter Vorformling in eine Form eingebracht und aufgeblasen wird. Es wird dort nur eine Zuhaltekraft benötigt, die dem Aufblasdruck entgegenwirkt und die Form geschlossen hält, so dass hier vergleichsweise geringe Kräfte ausreichend sind. Bei Extrusionsblasformmaschinen hingegen wird vorzugsweise ein heißer extrudierter Schlauch in übergequetschten Bereichen (Boden, Hals, Schulter, Griff) gleichzeitig verschweißt und abgequetscht. Die Form hat dafür vorzugsweise spezielle Schneidkanten. Die dafür erforderliche hohe Schließkraft ist abhängig von der Schweißnahtlänge und dem verwendeten Material. Im Augenblick des Formschlusses muss die Kraft spontan aufgebaut sein. Dieser Kraftaufbau ist mittels herkömmlichen elektrischen Linearmotoren nicht realisierbar. Bei der vorliegenden Erfindung wird das Aufrechterhalten einer im Moment des Formschließens erzeugten hohen Schließkraft mittels Ausnutzens der kurzzeitig möglichen hohen Spitzenmomente der Motoren und das Halten dieser Kraft (Federspannung aufgrund der Elastizität der beteiligten Bauteile) mittels Bremse beansprucht. Es entfällt eine offensichtlich zusätzliche Zuhaltevorrichtung. Bei der Blasdornbewegung erfolgt im Moment des Kontaktes des Blasdorns mit dem Kunststoff und der Form ein Abquetschen der Öffnung des zu blasenden Artikels. Dafür wird ebenso eine spontan aufgebrachte hohe Kraft benötigt. In beiden Fällen ist nicht der Aufblasdruck entscheidend für die zu erzeugende Kraft, sondern die erforderliche Verschweiß- und Abquetschkraft.

Die Anordnung kann sowohl die hydraulischen Antriebe für Formschließ- als auch für Kalibrierblasdornsysteme einer Extrusionsblasformmaschine vollständig ersetzen.

Dadurch dass der Elektromotor nach einer Aktivierung der Bremseinrichtung in einen stromlosen Zustand geschaltet werden kann, wird in erheblichem Maße Antriebsenergie eingespart.

Die Bremseinrichtung kann sowohl als rotatorisch wie auch als translatorisch wirkende Bremse ausgelegt sein.

Zur Aufrechterhaltung von Formschließ- und Kalibrierkräften kann die elastische Verformbarkeit von mindestens einem sich im Kraftfluss befindenden mechanischen Teil der Formschließ- und Kalibrierblasdornsysteme genutzt werden.

Weisen Formschließ- und/oder Kalibrierblasdornsysteme eine hohe Steifigkeit auf, kann zur Verbesserung der elastischen Verformbarkeit eine zusätzliche Feder eingesetzt werden.

Der Elektromotor kann eine hohe Drehzahl und ein kurzzeitig abrufbares hohes Spitzenmoment aufweisen, bei dem dann die Bremseinrichtung aktivierbar ist, um den Elektromotor in einen stromlosen Zustand zu schalten und eine hohe Energieeffizienz zu erreichen.

Die Bremseinrichtung kann für einen Material schonenden Abbau von Formschließ- oder Kalibrierkräften bei erneut auf das zuvor erzeugte Moment erregtem Elektromotor lösbar sein.

Für eine optimale Fahrweise kann der Zeitpunkt für eine Aktivierung der Bremseinrichtung bei Erreichen des erforderlichen Drehmomentes des Elektromotors eingestellt werden.

Ein mechanischer Hub ist linear abhängig von den Umdrehungen des Motors und kann somit aus Motordaten ermittelt werden. Die Kraft des Antriebs ist proportional zu einem Motorstrom und kann an Hand der Motorkenndaten aus dem Motorstrom ermittelt werden.

Der Stromanstieg zur Aktivierung des Elektromotors kann verzögert werden, um eine möglichst geringe Belastung und eine lange Lebensdauer der mechanisch beanspruchten Teile zu erreichen.

Da der Elektromotor für den Aufbau der erforderlichen Kraft nur eine sehr geringe Zeit von maximal 0,3 Sekunden benötigt und der Blasvorgang von 4 bis 25 Sekunden betragen kann, kann der Motor in jedem Fall über 90 % der gesamten Blaszeit stromlos geschaltet werden und somit durch die erfindungsgemäße Anordnung erheblich Energie eingespart werden.

Des weiteren wird ein Verfahren zum Antreiben von Formschließ- und Kalibrierblasdornsystemen bei einer Blasformmaschine vorgeschlagen, wobei es folgende Schritte umfasst: Aktivieren eines Elektromotors zum Ausfahren einer Schubstange mittels einer Schubmechanik, Aktivieren einer Bremseinrichtung bei Erreichen eines bis zum Spitzendrehmoment einstellbaren erforderlichen Drehmoments des Elektromotors, um die Schubstange in einem Zustand maximaler Spannung in ihrer Momentanposition zu halten und Schalten des Elektromotors in einen stromlosen Zustand. Mit diesem Verfahren kann die erfindungsgemäße Anordnung in vorteilhafter Weise betrieben werden.

Für eine Material schonende Fahrweise kann der Elektromotor nach einer vorgegebenen Blasformprozesszeit vor einem Deaktivieren der Bremseinrichtung erneut auf das zuvor erzeugte Drehmoment aktiviert werden.

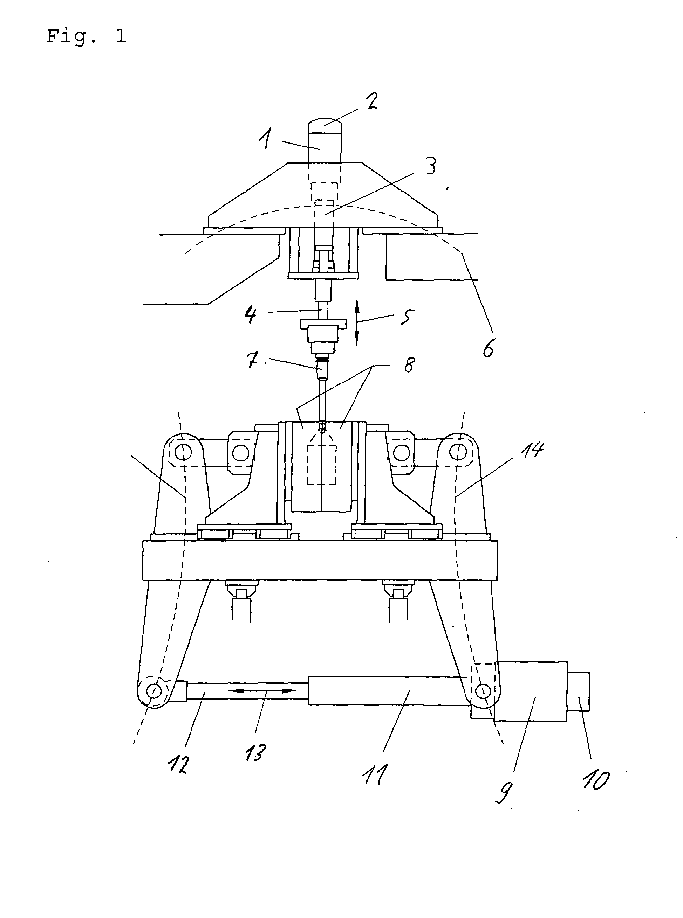

Ein Ausführungsbeispiel der Erfindung wird nachfolgend anhand der Figur 1 erklärt.

Es zeigt
- Fig. 1: einen Querschnitt durch ein Formschließ- und Kalibrierblasdornsystem einer Blasform- maschine.

In Fig. 1 ist ein Querschnitt durch ein Formschließ- und Kalibrierblasdornsystem einer Blasformmaschine dargestellt.

Das Kalibrierblasdornsystem weist einen Elektromotor 1, eine Bremseinrichtung 2, eine Schubmechanik 3, eine Schubstange 4 und einen Kalibrierblasdorn in Kalibrierstellung 7 auf. Die Bremseinrichtung 2 und die Schubmechanik 3 sind an dem Elektromotor 1 angeordnet. Innerhalb der Schubmechanik 3 ist die Schubstange 4 in Bewegungsrichtungen 5 bewegbar angeordnet. An der Schubstange 4 ist der Kalibrierblasdorn 7 angeordnet.

Das Formschließsystem weist einen Elektromotor 9, eine Bremseinrichtung 10, eine Schubmechanik 11, eine Schubstange 12 und eine Blasform 8 auf, in die der Kalibrierblasdorn 7 eingeführt ist. Die Bremseinrichtung 10 und die Schubmechanik 11 sind an den Elektromotor 9 angeordnet. Innerhalb der Schubmechanik 11 ist die Schubstange 12 in Bewegungsrichtungen 13 bewegbar angeordnet.

Um die Blasform 8 zu schließen, und für einen Blasformprozess mit einer hohen Kraft geschlossen zu halten, wird der Elektromotor 9 zum Antrieb der Schubmechanik 11 aktiviert. Die vorzugsweise als Spindeltrieb ausgeführte Schubmechanik 11 bewegt die Schubstange 13 aus der Schubmechanik 11 heraus und der Elektromotor 9 erreicht das erforderliche Drehmoment. Unmittelbar nachdem die Blasform 8 über eine elastische Verformung 14 mit hoher Kraft geschlossen ist, wird die Bremseinrichtung 10 aktiviert, um die Schubstange 12 in einem Zustand konstant bleibender Spannung in ihrer Momentanposition zu halten und die Blasform 8 mit einer erforderlichen Schließkraft geschlossen zu halten.

Nach einem erfolgten Blasformprozess innerhalb der geschlossenen Blasform 8 wird der Elektromotor 9 erneut auf das zuvor erzeugte Drehmoment erregt und die Bremseinrichtung 2 wird deaktiviert, um die Blasform für eine Entnahme des Formlings zu öffnen.

Analog zu der Schließkraft für das Formschließsystem wird mit dem Elektromotor 1, der Bremseinrichtung 2, der Schubmechanik 3 und der Schubstange 4 mittels einer elastischen Verformung 6 die Kalibrierkraft für das Kalibriersystem aufgebracht, aufrechterhalten und wieder abgebaut.

Die Elektromotoren 1 und 9 sind auf eine hohe Drehzahl und ein kurzeitig abrufbares hohes Spitzenmoment ausgelegt und die Bremseinrichtungen 2 und 10 sind rotatorisch oder translatorisch wirkend ausgelegt.

Bei Formschließ- und Kalibrierblasdornsystem, die eine hohe Steifigkeit aufweisen, wird zur Erhöhung der elastischen Verformbarkeit eine zusätzliche Feder eingesetzt.

Der Zeitpunkt für eine Aktivierung der Bremseinrichtungen 2 und 10 ist bei Erreichen des erforderlichen Drehmomentes der Elektromotoren 9 und 11 für eine optimale Fahrweise einstellbar.

Ein mechanischer Hub ist linear abhängig von den Umdrehungen des Motors und kann somit aus Motordaten ermittelt werden. Die Kraft des Antriebs ist proportional zu einem Motorstrom und kann an Hand der Motorkenndaten aus dem Motorstrom ermittelt werden.

Für eine möglichst geringe Belastung und eine lange Lebensdauer mechanisch beanspruchter Teile wird den Elektromotoren ein verzögerter Stromanstieg zur Aktivierung zugeführt.

Da die Zeit, in der die Elektromotoren stromlos geschaltet werden können, mehr als 90 % des Zeitraumes eines gesamten Blasformvorganges einnimmt, ermöglicht die erfindungsgemäße Anordnung eine erhebliche Energieeinsparung.

### Bezugszeichenliste

- 1: Elektromotor des Kalibriersystems
- 2: Bremseinrichtung des Kalibriersystems
- 3: Schubmechanik des Kalibriersystems
- 4: Schubstange des Kalibriersystems
- 5: Bewegungsrichtungen des Kalibrierblasdorns
- 6: Elastische Verformung des Kalibriersystems
- 7: Kalibrierblasdorn in Kalibrierstellung
- 8: Geschlossene Blasform
- 9: Elektromotor des Formschließsystems
- 10: Bremseinrichtung des Formschließsystems
- 11: Schubmechanik des Formschließsystems
- 12: Schubstange des Formschließsystems
- 13: Bewegungsrichtungen des Formschließsystems
- 14: Elastische Verformung des Formschließsystems

## Patentansprüche

1. Anordnung zum Antrieb einer Extrusionsblasformmaschine, die eine Schubmechanik (3; 11) eine Schubstange (4; 12) und mindestens einen Elektromotor (1; 9) umfasst, wobei die Schubstange (4; 12) durch die Schubmechanik (3; 11)bewegbar ist, die von dem mindestens einen Elektromotor (1; 9) angetrieben ist, wobei der Elektromotor (1; 9) eine zusätzliche Bremseinrichtung (2; 10) aufweist, die bei Erreichen eines erforderlichen Drehmomentes wenn nötig bis zur Ausnutzung des möglichen Spitzenmomentes des Elektromotors (2; 10) aktivierbar ist, um die Schubstange (4; 12) in einem Zustand einer benötigten Kraft in ihrer Momentanposition zu halten.

2. Anordnung nach Anspruch 1, **dadurch gekennzeichnet, dass** diese Formschließ- und/oder Kalibrierblasdornsysteme der Extrusionsblasformmaschine antreibt.

3. Anordnung nach einem der Ansprüche 1 oder 2, **dadurch gekennzeichnet, dass** der Elektromotor (1; 9) bei aktivierter Bremseinrichtung (2; 10) in einen stromlosen Zustand schaltbar ist.

4. Anordnung nach einem der Ansprüche 1 bis 3, **dadurch gekennzeichnet, dass** die Bremseinrichtung (2; 10) rotatorisch und/oder translatorisch wirkt.

5. Anordnung nach einem der Ansprüche 1 bis 4, **dadurch gekennzeichnet, dass** zur Aufrechterhaltung von Formschließ- und/oder Kalibrierkraft eine elastische Verformbarkeit (6; 14) von mindestens einem sich im Kraftfluss befindenden mechanischen Teil des Formschließ- und/oder Kalibrierblasdornsystems nutzbar ist.

6. Anordnung nach einem der Ansprüche 1 bis 5, **dadurch gekennzeichnet, dass** bei Formschließ- und/oder Kalibrierblasdornsystemen mit hoher Steifigkeit eine zusätzliche Feder einsetzbar ist.

7. Anordnung nach einem der Ansprüche 1 bis 6, **dadurch gekennzeichnet, dass** der Elektromotor (1; 9) eine hohe Drehzahl und ein kurzeitig abrufbares hohes Spitzenmoment aufweist.

8. Anordnung nach einem der Ansprüche 1 bis 7, **dadurch gekennzeichnet, dass** die Bremseinrichtung (2; 10) für einen Abbau von Formschließ- und/oder Kalibrierkräften bei erneut auf das zuvor erzeugte Drehmoment erregtem Elektromotor (1; 9) lösbar ist.

9. Anordnung nach einem der Ansprüche 1 bis 8, **dadurch gekennzeichnet, dass** ein Zeitpunkt für eine Aktivierung der Bremseinrichtung (2; 10) einstellbar ist.

10. Anordnung nach einem der Ansprüche 1 bis 9, **dadurch gekennzeichnet, dass** ein mechanischer Hub linear abhängig von einer Anzahl von Umdrehungen des Motors ist und somit aus Motordaten ermittelt werden kann.

11. Anordnung nach einem der Ansprüche 1 bis 10, **dadurch gekennzeichnet, dass** eine Kraft des Antriebs proportional zu einem Motorstrom ist und an Hand von Motorkenndaten aus dem Motorstrom ermittelt werden kann.

12. Anordnung nach einem der Ansprüche 1 bis 11, **dadurch gekennzeichnet, dass** der Stromanstieg zur Aktivierung des Elektromotors (1; 9) einer Verzögerung unterziehbar ist.

13. Anordnung nach einem der Ansprüche 1 bis 12, **dadurch gekennzeichnet, dass** der Elektromotor für einen Aufbau der erforderlichen Kraft nur eine sehr geringe Zeit von maximal 0,3 Sekunden benötigt und ein Blasvorgang von 4 bis über 25 Sekunden betragen kann und der Motor in jedem Fall über 90 % einer gesamten Blaszeit stromlos geschaltet werden kann.

14. Verfahren zum Antreiben von Formschließ- und/oder Kalibrierblasdornsystemen bei einer Blasformmaschine, **dadurch gekennzeichnet, dass** es folgende Schritte umfasst:
- Aktivieren eines Elektromotors (1; 9) zum Ausfahren einer Schubstange (4; 12) mittels einer Schubmechanik (3, 11),
- Aktivieren einer Bremseinrichtung (2; 10) bei Erreichen eines erforderlichen Drehmomentes des Elektromotors (1; 9), um die Schubstange (4; 12) in einem Zustand der benötigten Spannung in ihrer Momentanposition zu halten und
- Schalten des Elektromotors (1; 9) in einen stromlosen Zustand.

15. Verfahren nach Anspruch 14, **dadurch gekennzeichnet, dass** nach einer vorgegebenen Blasformprozesszeit der Elektromotor (1; 9) vor einem Deaktivieren der Bremseinrichtung (2; 10) erneut auf das zuvor erzeugte Drehmoment aktiviert wird.
